# EUROPÄISCHE PATENTSCHRIFT

(11) **EP 1 160 429 B1**
(45) Veröffentlichungstag und Bekanntmachung des Hinweises auf die Patenterteilung: **01.06.2005**
(21) Anmeldenummer: 01111231.5
(22) Anmeldetag: 15.05.2001
(51) Int. Cl.: F02B 31/06

(54) **Direkteinspritzende Brennkraftmaschine**
Direct injection internal combustion engine
Moteur à combustion interne à injection directe

(30) Priorität: 27.05.2000 DE 10026377
(43) Veröffentlichungstag der Anmeldung: 05.12.2001
(73) Patentinhaber: Volkswagen Aktiengesellschaft, 38436 Wolfsburg (DE)
(72) Erfinder: Thiele, Fred, 38471 Rühen (DE); Hilderts, Horst-Günter, 38448 Wolfsburg (DE); Voigt, Dieter, 38110 Braunschweig (DE); Kiel, Martin, 39359 Mannhausen (DE)

(56) Entgegenhaltungen:
- EP-A- 0 916 824
- EP-A- 0 922 848
- EP-A- 0 953 758
- DE-A- 19 753 965
- DE-B- 2 035 939
- DE-C- 3 137 982
- US-A- 5 551 392
- US-A- 5 564 383

## Beschreibung

Die Erfindung betrifft eine direkteinspritzende Brennkraftmaschine, mit wenigstens einem Einlasskanal zur Luftbeaufschlagung eines zugeordneten Zylinders, wobei im Einlasskanal wenigstens ein Einlassventil und ein Einspritzventil angeordnet sind, gemäß Oberbegriff des Anspruchs 1.

Eine direkteinspritzende Brennkraftmaschine der hier angesprochenen Art ist bekannt (DE 197 53 965 A1). Eine derart ausgebildete Brennkraftmaschine erlaubt nachteilhafterweise nicht eine variable Einstellung der Luftdurchströmung durch den Einlasskanal, insbesondere hinsichtlich eines zu erzielenden Luftströmungsprofils, um eine verbesserte Verbrennung im Verbrennungsraum des Zylinders zu erzielen.

Aus der EP 0 922 848 A2 ist ein Saugkanal für eine Brennkraftmaschine bekannt, welcher im Zylinderkopf ausgebildet ist und innerhalb dessen eine Leitvorrichtung angeordnet ist. Diese Leitvorrichtung kann im Strömungsquerschnitt veränderbar ausgebildet sein, wobei beispielsweise die gesamte Leitvorrichtung um eine Drehachse verschwenkbar ist oder die Leitvorrichtung eine separat angeordnete und verstellbare Klappe aufweist. Dieses Dokument weist darauf hin, dass alternativ zu den gezeigten und beschriebenen Ausführungsformen ein Einspritzventil für Kraftstoff so angeordnet sein kann, dass dieses den Kraftstoff direkt in den Brennraum einspritzt.

Es ist Aufgabe der Erfindung, eine direkteinspritzende Brennkraftmaschine der eingangs genannten Art zu schaffen, welche kompakt ausgebildet ist und gleichzeitig eine variable Einstellung des Durchströmungsquerschnitts des Einlasskanals zulässt.

Zur Lösung der Aufgabe wird eine direkteinspritzende Brennkraftmaschine mit den Merkmalen des Anspruchs 1 vorgeschlagen, die sich dadurch auszeichnet, dass ein sich im Einlasskanal erstreckendes Schaltelement zur Einstellung des Durchströmungsquerschnitts des Einlasskanals vorgesehen ist, wobei das Schaltelement von einem Einspritzventil durchsetzt wird. Mittels eines zusätzlich im Einlasskanal angeordneten Schaltelements kann in betriebssicherer Weise der Durchströmungsquerschnitt des Einlasskanals zur Erzielung eines erwünschten Luftströmungsprofils und somit einer verbesserten Verbrennung im Verbrennungsraum des Zylinders eingestellt werden. Dabei ist aufgrund der Integration des Schaltelements und des Einspritzventils im Einlasskanal die direkteinspritzende Brennkraftmaschine kompakt ausbildbar. Der unmittelbar an den Einlasskanal angrenzende Bauraum kann somit zur Anordnung von weiteren Funktionselementen der Brennkraftmaschine genutzt werden. Die Einstellung des Durchströmungsquerschnitts des Einlasskanals mittels des Schaltelements kann beispielsweise in Form einer Aufteilung des Einlasskanals in einen unteren Strömungsraum, welcher in geschlossener Stellung des Schaltelements nicht oder weniger luftdurchströmt wird, und in einen oberen Strömungsraum erfolgen, welcher ein betriebsgünstiges beziehungsweise verbrennungsgünstiges Strömungsprofil der den Einlasskanal durchsetzenden Luft erzeugt. Mittels des Schaltelements ist es somit möglich, eine betriebsgünstige und variable Luftbeaufschlagung eines entsprechenden Zylinders zu erzielen und gleichzeitig eine kompakte Baugruppe, bestehend aus Zylinder, Einlasskanal, Einlassventil, Einspritzventil und Schaltelement, zu gewährleisten.

Dadurch, dass das Einspritzventil das Schaltelement durchsetzt ist es ermöglicht, dass sich das Schaltelement im Einlasskanal bis zum Bereich des Einspritzventils beziehungsweise über diesen Bereich hinaus erstrecken kann und somit in besonders effektiver Weise die Erzeugung eines erwünschten Luftströmungsverlaufs aus dem Einlasskanal in den Verbrennungsraum des Zylinders erlaubt.

Vorzugsweise weist das Schaltelement eine im Wesentlichen in Luftströmungsrichtung des Einlasskanals sich erstreckende ovale Öffnung auf, in welcher das zur Luftströmungsrichtung geneigt angeordnete Einspritzventil aufgenommen ist. Ein derart ausgebildetes Schaltelement ermöglicht einerseits eine effektive Einstellung des Durchströmungsquerschnitts des Einlasskanals und eine kompakte Ausgestaltung dieser Baugruppe, bestehend aus Einlasskanal, Einlassventil, Einspritzventil und Schaltelement.

Gemäß einer bevorzugten Ausführungsform ist das Einspritzventil in wenigstens einem sich im Einlasskanal erstreckenden, rippenförmigen Vorsprung eines zugeordneten Zylinderkopfes teilweise aufgenommen. Die teilweise Aufnahme und die Stützung des Einspritzventils erfolgt somit hauptsächlich durch den Zylinderkopf beziehungsweise durch dessen in den Einlasskanal ragenden, rippenförmigen Vorsprung. Dies ermöglicht, das Schaltelement dünnwandig auszubilden, so dass ein möglichst kleines Einbauvolumen durch das Schaltelement im Einlasskanal belegt wird. Da das Schaltelement keine beziehungsweise eine lediglich untergeordnete Stützfunktion hinsichtlich des Einspritzventils aufweist, kann es somit in flexibler Weise als strömungsgünstiges Funktionselement ausgebildet werden.

Mit Vorteil weist das Einspritzventil einen strömungsgünstigen, insbesondere ovalen Querschnitt auf, wobei die Längsachse des ovalen Querschnitts in Luftströmungsrichtung liegt. Statt eines ovalen Querschnitts kann das Einspritzventil gemäß einer alternativen Ausführungsform auch beispielsweise flügelförmig ausgebildet sein, so dass eine strömungsgünstige und verhältnismäßig kleine Störfläche eine betriebsgünstige Umströmung des sich im Einlasskanal befindenden Anteils des Einspritzventils erlaubt.

Es ist somit mittels des Schaltelements möglich, den Durchströmungsquerschnitt des Einlasskanals variabel einzustellen, wobei gleichzeitig das im Querschnitt oval oder flügelförmig ausgebildete Einspritzventil im Einlasskanal strömungsgünstig luftumströmt wird.

Vorzugsweise enthält die ovale Öffnung des Schaltelements an wenigstens einem stärker gekrümmten Ende eine Ausbuchtung, durch welche der zugehörige Vorsprung des Zylinderkopfes das Schaltelement durchsetzt. Da das Schaltelement keine beziehungsweise eine lediglich untergeordnete Stützfunktion hinsichtlich des Einspritzventils aufweist, kann es beispielsweise als dünnwandiges, sich im Wesentlichen in Luftströmungsrichtung im Einlasskanal erstreckendes Blech ausgebildet sein, das mit einer an den jeweiligen Querschnitt der selbiges durchsetzenden Elemente (Einspritzventil, Vorsprung) angepassten Durchgangsöffnung versehen sein kann.

Mit Vorteil weist das Schaltelement ein sich in Luftströmungsrichtung erstreckendes Führungsblech und eine Schaltklappe auf, die zur Einstellung des Durchströmungsquerschnitts des Einlasskanals zwischen einer offenen und einer geschlossenen Betriebsstellung schwenkbar ist. Dabei kann das Schaltelement derart ausgebildet sein, dass bei offener Betriebsstellung der Schaltklappe ein nahezu durch den gesamten Durchströmungsquerschnitt des Einlasskanals fliessender Luftstrom in den Verbrennungsraum des Zylinders gelangt, während bei einer geschlossenen Betriebsstellung der Schaltklappe der Durchströmungsquerschnitt des Einlasskanals beispielsweise auf einen oberen Teilbereich begrenzt wird. Ein im Einlasskanal angeordnetes Führungsblech ist fertigungstechnisch verhältnismäßig einfach herstellbar und besonders geeignet, mittels einer Wirkverbindung mit einer stromaufwärts angeordneten Schaltklappe in zuverlässiger Weise eine erwünschte Einstellung beziehungsweise Variation des Durchströmungsquerschnitts des Einlasskanals durch eine entsprechende Schwenkbewegung der Schaltklappe zu bewirken.

Vorzugsweise ist das Führungsblech in den Zylinderkopf eingegossen. Ein derartig integriertes Führungsblech im Zylinderkopf ist fertigungstechnisch mittels eines geeigneten Gießverfahrens verhältnismäßig einfach realisierbar.

Gemäß einer bevorzugten Ausführungsform weist der Vorsprung einen strömungsgünstigen Querschnitt mit in Luftströmungsrichtung konvex ausgebildeter Außenfläche auf. Hierdurch werden ähnliche vorteilhafte Wirkungen erzielt, die mittels eines oben erwähnten, im Querschnitt entsprechend ausgebildeten Einspritzventils erhaltbar sind.

Weitere vorteilhafte Ausgestaltungen der Erfindung ergeben sich aus der Beschreibung.

Die Erfindung wird nachfolgend in einem Ausführungsbeispiel anhand einer zugehörigen Zeichnung näher erläutert. Es zeigen:
- Figur 1: eine schematische Darstellung eines mit einem Einlasskanal und einem Auslasskanal wirkverbundenen Zylinders einer direkteinspritzenden Brennkraftmaschine;
- Figur 2: eine schematische Darstellung eines Schnitts gemäß der Schnittlinie II-II durch die Anordnung der Figur 1;
- Figur 3: eine schematische Darstellung eines Schnitts gemäß der Schnittlinie III-III durch die Anordnung der Figur 1 und
- Figur 4: eine schematische Darstellung der Anordnung der Figur 1 mit Zylinderkopf.

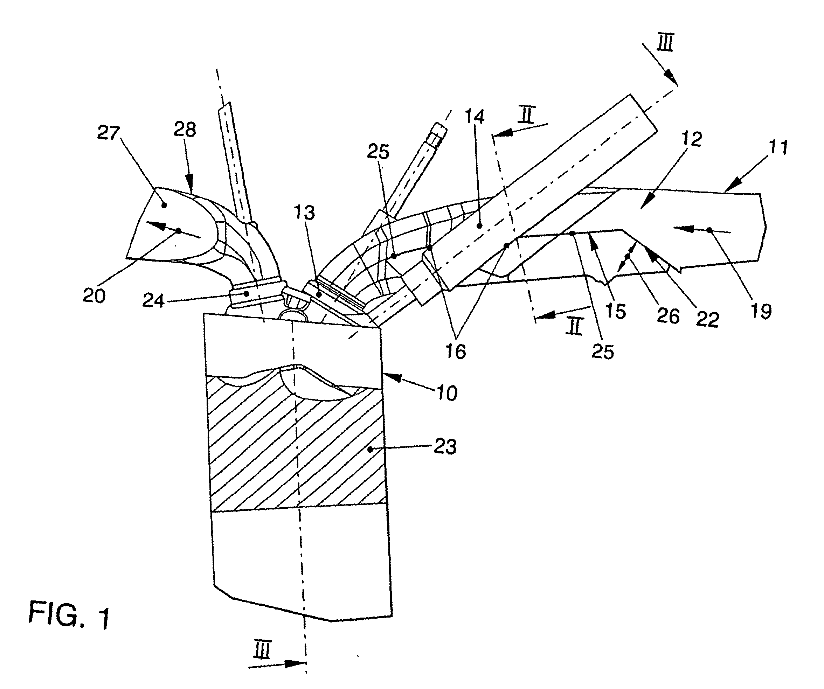

Die Figuren 1 bis 4 zeigen einen mit 10 bezeichneten Zylinder einer direkteinspritzenden Brennkraftmaschine, der eintrittsseitig mit einem Ansaugrohr 11 und austrittsseitig mit einem Abgasrohr 28 wirkverbunden ist. Im Zylinder 10 ist in an sich bekannter Weise ein Kolben 23 aufgenommen. Das Saugrohr 11 enthält einen Einlasskanal 12, der im Betrieb zur Luftbeaufschlagung des Zylinders 10 Frischluft in Luftströmungsrichtung gemäß Pfeil 19 fördert. Der Einlasskanal 12 ist an sich bekannter Weise mittels eines in selbigem angeordneten Einlassventils 13 mit einem Verbrennungsraum des Zylinders 10 wirkverbunden. Austrittsseitig ist der Verbrennungsraum des Zylinders 10 in ebenfalls an sich bekannter Weise mittels eines Auslassventils 24 mit einem Auslasskanal 27 des Abgasrohrs 28 wirkverbunden. Ein zur Luftströmungsrichtung (Pfeil 19) geneigt angeordnetes Einspritzventil 14 (Hochdruckeinspritzventil) durchsetzt den Einlasskanal 12 des Saugrohrs 11 und ist in bekannter Weise mit dem Verbrennungsraum des Zylinders 10 wirkverbunden. Zur Einstellung des Durchströmungsquerschnitts des Einlasskanals 12 ist ein sich in selbigem erstreckendes Schaltelement 15 vorgesehen. Das Schaltelement 15 weist ein sich im Wesentlichen in Luftströmungsrichtung 19 erstreckendes Führungsblech 25 und eine Schaltklappe 22 auf, die zur Einstellung des

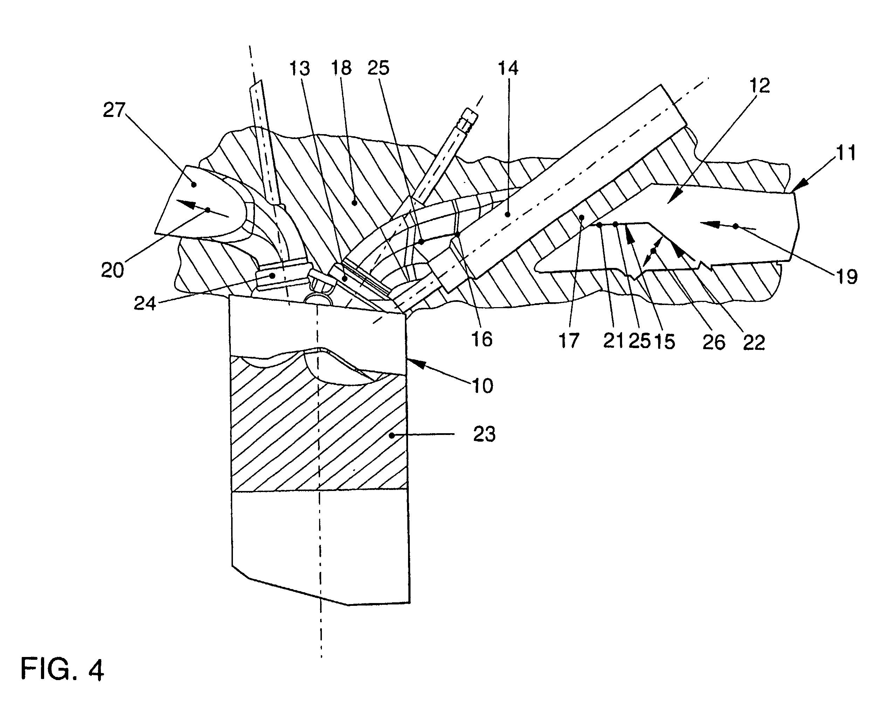

Durchströmungsquerschnitts des Einlasskanals 12 zwischen einer offenen Betriebsstellung (nicht dargestellt) und einer geschlossenen Betriebsstellung (siehe Figuren 1 und 4) gemäß Doppelpfeil 26 um eine Achse schwenkbar ist. Das Führungsblech 25 weist eine im Wesentlichen in Luftströmungsrichtung (Pfeil 19) sich erstreckende, durchgehende, ovale Öffnung 16 auf, in welcher das zur Luftströmungsrichtung 19 geneigt angeordnete Einspritzventil 14 aufgenommen ist. Das Einspritzventil 14 durchsetzt somit den Einlasskanal 12 und das in diesem im Wesentlichen in Luftströmungsrichtung (Pfeil 19) angeordnete Schaltelement 15 beziehungsweise dessen Führungsblech 25.

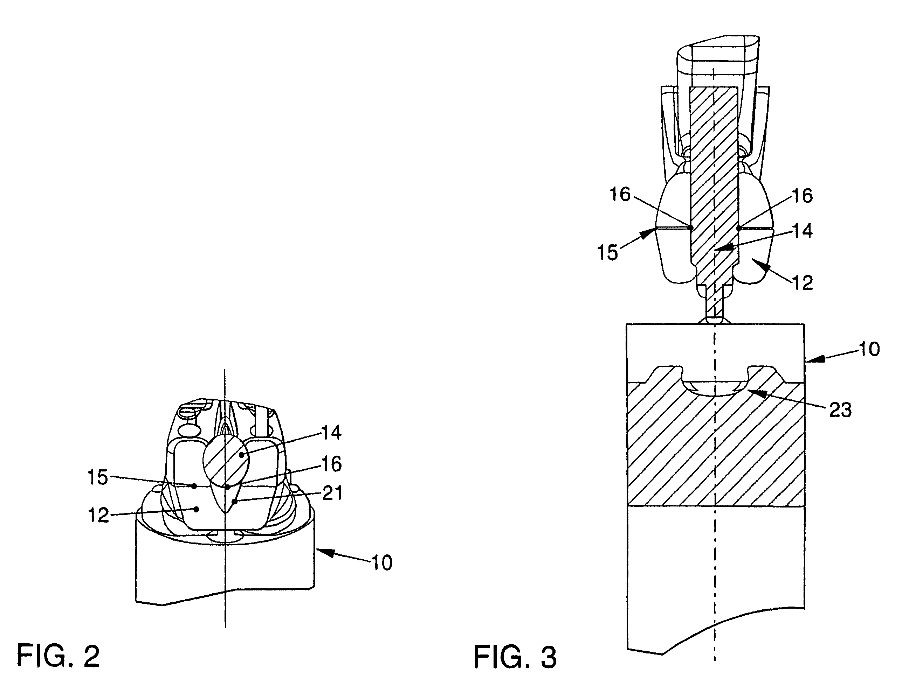

Entsprechend Figur 4 ist das Einspritzventil 14 in einem sich im Einlasskanal 12 erstreckenden, rippenförmigen Vorsprung 17 eines dem Zylinder 10 zugeordneten Zylinderkopfes 18 teilweise aufgenommen beziehungsweise abgestützt. Da auch der rippenförmige Vorsprung 17 des Zylinderkopfes 18 den Einlasskanal 12 unter einem Winkel von circa 45° zur Luftströmungsrichtung (Pfeil 19) entsprechend dem Einspritzventil 14 durchsetzt, ist die ovale Öffnung 16 des Schaltelements 15 beziehungsweise des Führungsblechs 25 mit einer entsprechenden Ausbuchtung 21 (siehe Figur 2) versehen, in welcher der Vorsprung 17 aufgenommen ist. Die ovale Öffnung 16 ist derart ausgebildet, dass ihre Längsachse in Luftströmungsrichtung (Pfeil 19) liegt. In entsprechender Weise ist der Querschnitt des Einspritzventils 14 an die Öffnung 16 angepasst und vorzugsweise oval ausgebildet mit der Längsachse des Ovals in Luftströmungsrichtung (Pfeil 19). Hierdurch wird eine strömungsgünstige Luftumströmung des Einspritzventils 14 im Einlasskanal 12 des Saugrohrs 11 erhalten. Aus dem gleichen Grund ist auch der Vorsprung 17 des Zylinderskopfes 18, welcher in der stromaufwärts am stärker gekrümmten Ende der ovalen Öffnung 16 des Führungsblechs 25 ausgebildeten Ausbuchtung 21 aufgenommen ist, mit einem strömungsgünstigen Querschnitt versehen, in dem seine Außenfläche in Luftströmungsrichtung (Pfeil 19) konvex ausgebildet ist.

Das Führungsblech 25 des Schaltelements 15 kann im Zylinderkopf 18 eingegossen sein und dient dazu, bei geschlossener Betriebsstellung der Schaltklappe 22 (siehe Figuren 1 und 4) die gemäß Pfeil 19 in Luftströmungsrichtung durch den Einlasskanal 12 des Saugrohrs 11 strömende Luft durch einen Teilquerschnitt des Einlasskanals 12 zum Zylinder 10 zu leiten und somit eintrittsseitig im Verbrennungsraum des Zylinders 10 ein gewünschtes, vorzugsweise walzenartiges Strömungsprofil zu erzeugen, durch das eine verbesserte und wirkungsgradgünstigere Verbrennung im Zylinder 10 erhaltbar ist.

Entsprechend den Figuren 1 und 4 ist der genannte Teilquerschnitt des Einlasskanals 12 auf einen oberen Bereich des Einlasskanals 12 beschränkt. Wenn die Schaltklappe 22 gemäß Doppelpfeil 26 in eine offene Betriebsstellung geschwenkt wird, unter Freigabe des zuvor nicht für die den Einlasskanal 12 durchströmende Luft zugänglichen unteren Teilbereichs des Durchströmungsquerschnitts des Einlasskanals 12, erfolgt die Luftbeaufschlagung des Verbrennungsraums des Zylinders 10 unter Ausnutzung fast des gesamten Durchströmungsquerschnitts des Einlasskanals 12.

Das bei der Verbrennung im Verbrennungsraum des Zylinders 10 entstehende Abgas wird -wie an sich bekannt- gemäß Pfeil 20 durch den Auslasskanal 27 des Abgasrohrs 28 zu weiteren, nicht dargestellten Funktionseinheiten der Brennkraftmaschine geführt.

## Patentansprüche

1. Direkteinspritzende Brennkraftmaschine, mit wenigstens, einem Einlasskanal (12) zur Luftbeaufschlagung eines zugeordneten Zylinders (10) wobei im Einlasskanal (12) wenigstens ein Einlassventil (13) und ein Einspritzventil (14) angeordnet sind, **dadurch gekennzeichnet, dass** ein sich im Einlasskanal (12) erstreckendes Schaltelement (15) zur Einstellung des Durchströmungsquerschnitts des Einlasskanals (12) vorgesehen ist und dass das Einspritzventil (14) das Schaltelement (15) durchsetzt.

2. Brennkraftmaschine nach Anspruch 1, **dadurch gekennzeichnet, dass** das Schaltelement (15) eine im Wesentlichen in Luftströmungsrichtung (19) des Einlasskanals (12) sich erstreckende ovale Öffnung (16) aufweist, in welcher das zur Luftströmungsrichtung (19) geneigt angeordnete Einspritzventil (14) aufgenommen ist.

3. Brennkraftmaschine nach einem der vorhergehenden Ansprüche, **dadurch gekennzeichnet, dass** das Einspritzventil (14) in wenigstens einem sich im Einlasskanal (12) erstreckenden, rippenförmigen Vorsprung (17) eines zugeordneten Zylinderkopfes (18) teilweise aufgenommen ist.

4. Brennkraftmaschine nach einem der vorhergehenden Ansprüche, **dadurch gekennzeichnet, dass** das Einspritzventil (14) einen strömungsgünstigen, insbesondere ovalen Querschnitt aufweist, wobei die Längsachse des ovalen Querschnitts in Luftströmungsrichtung (19) liegt.

5. Brennkraftmaschine nach einem der vorhergehenden Ansprüche, **dadurch gekennzeichnet, dass** die ovale Öffnung (16) des Schaltelements (15) an wenigstens einem stärker gekrümmten Ende eine Ausbuchtung (21) aufweist, durch welche der zugehörige Vorsprung (17) des Zylinderkopfes (18) das Schaltelement (15) durchsetzt.

6. Brennkraftmaschine nach einem der vorhergehenden Ansprüche, **dadurch gekennzeichnet, dass** das Schaltelement (15) ein sich in Luftströmungsrichtung (19) erstreckendes Führungsblech (25) und eine Schaltklappe (22) aufweist, die zur Einstellung des Durchströmungsquerschnitts des Einlasskanals (12) zwischen einer offenen und einer geschlossenen Betriebsstellung schwenkbar ist.

7. Brennkraftmaschine nach einem der vorhergehenden Ansprüche, **dadurch gekennzeichnet, dass** das Führungsblech (25) in den Zylinderkopf (18) eingegossen ist.

8. Brennkraftmaschine nach einem der vorhergehenden Ansprüche, **dadurch gekennzeichnet, dass** der Vorsprung (17) einen strömungsgünstigen Querschnitt mit in Luftströmungsrichtung (19) konvex ausgebildeter Außenfläche aufweist.

## Claims

1. Direct injection internal combustion engine, having at least one inlet duct (12) for supplying air to an associated cylinder (10), at least one inlet valve (13) and one injection valve (14) being arranged in the inlet duct (12), **characterized in that** a switching element (15) which extends in the inlet duct (12) is provided for setting the throughflow cross section of the inlet duct (12), and **in that** the injection valve (14) penetrates the switching element (15).

2. Internal combustion engine according to Claim 1, **characterized in that** the switching element (15) has an oval opening (16) which extends substantially in the direction (19) of airflow along the inlet duct (12) and in which the injection valve (14) which is arranged so as to be inclined with respect to the airflow direction (19) is accommodated.

3. Internal combustion engine according to one of the preceding claims, **characterized in that** the injection valve (14) is partially accommodated in at least one rib-shaped projection (17) of an associated cylinder head (18), which projection (17) extends in the inlet duct (12).

4. Internal combustion engine according to one of the preceding claims, **characterized in that** the injection valve (14) has a cross section which is favourable to flow and is, in particular, oval, the longitudinal axis of the oval cross section lying in the airflow direction (19).

5. Internal combustion engine according to one of the preceding claims, **characterized in that** the oval opening (16) of the switching element (15) has a bulge (21) at at least one end which is curved to a more pronounced extent, via which bulge (21) the associated projection (17) of the cylinder head (18) penetrates the switching element (15).

6. Internal combustion engine according to one of the preceding claims, **characterized in that** the switching element (15) has a guide plate (25) which extends in the airflow direction (19) and a switching flap (22) which can be pivoted between an open and a closed operating position in order to set the throughflow cross section of the inlet duct (12).

7. Internal combustion engine according to one of the preceding claims, **characterized in that** the guide plate (25) is cast into the cylinder head (18).

8. Internal combustion engine according to one of the preceding claims, **characterized in that** the projection (17) has a cross section which is favourable to flow with a convexly configured outer surface in the airflow direction (19).

## Revendications

1. Moteur à combustion interne à injection directe, comprenant au moins un conduit d'admission (12) pour alimenter en air un cylindre associé (10), au moins une soupape d'admission (13) et une soupape d'injection (14) étant disposées dans le conduit d'admission (12), **caractérisé en ce qu'**un élément de commutation (15) s'étendant dans le conduit d'admission (12) est prévu pour ajuster la section transversale d'écoulement du conduit d'admission (12) et **en ce que** la soupape d'injection (14) traverse l'élément de commutation (15).

2. Moteur à combustion interne selon la revendication 1, **caractérisé en ce que** l'élément de commutation (15) présente une ouverture ovale (16) s'étendant essentiellement dans le sens de l'écoulement de l'air (19) du conduit d'admission (12), dans laquelle ouverture est reçue la soupape d'injection (14) disposée de manière inclinée par rapport au sens d'écoulement de l'air (19).

3. Moteur à combustion interne selon l'une quelconque des revendications précédentes, **caractérisé en ce que** la soupape d'injection (14) est partiellement reçue dans au moins une saillie (17) en forme de nervure d'une culasse associée (18), s'étendant dans le conduit d'admission (12).

4. Moteur à combustion interne selon l'une quelconque des revendications précédentes, **caractérisé en ce que** la soupape d'injection (14) présente une section transversale favorable à l'écoulement, de préférence ovale, l'axe longitudinal de la section transversale ovale se trouvant dans le sens de l'écoulement de l'air (19).

5. Moteur à combustion interne selon l'une quelconque des revendications précédentes, **caractérisé en ce que** l'ouverture ovale (16) de l'élément de commutation (15) présente un renflement (21) au niveau d'au moins une extrémité fortement courbée, à travers lequel la saillie associée (17) de la culasse (18) traverse l'élément de commutation (15).

6. Moteur à combustion interne selon l'une quelconque des revendications précédentes, **caractérisé en ce que** l'élément de commutation (15) présente une tôle de guidage (25) s'étendant dans le sens de l'écoulement d'air (19) et un volet de commutation (22) qui peut pivoter entre une position de fonctionnement ouverte et une position de fonctionnement fermée pour l'ajustement de la section transversale d'écoulement du conduit d'admission (12).

7. Moteur à combustion interne selon l'une quelconque des revendications précédentes, **caractérisé en ce que** la tôle de guidage (25) est coulée dans la culasse (18).

8. Moteur à combustion interne selon l'une quelconque des revendications précédentes, **caractérisé en ce que** la saillie (17) présente une section transversale favorable à l'écoulement avec une surface extérieure convexe dans le sens de l'écoulement d'air (19).
